# EUROPÄISCHE PATENTSCHRIFT

(11) **EP 1 768 865 B1**
(45) Veröffentlichungstag und Bekanntmachung des Hinweises auf die Patenterteilung: **14.05.2014**
(21) Anmeldenummer: 05769455.6
(22) Anmeldetag: 07.07.2005
(51) Int. Cl.: B60J 7/19

(54) **CABRIOLET-FAHRZEUG**
CABRIOLET
VEHICULE CABRIOLET

(30) Priorität: 13.07.2004 DE 102004033870
(43) Veröffentlichungstag der Anmeldung: 04.04.2007
(73) Patentinhaber: Valmet Automotive Oy, 23500 Uusikaupunki (FI)
(72) Erfinder: FEUSSAHRENS, Heino, 49419 Wagenfeld (DE); BUNSMANN, Winfried, 49143 Bissendorf (DE)
(74) Vertreter: Kronthaler, Schmidt & Coll.
(86) Internationale Anmeldenummer: PCT/DE2005/001208
(87) Internationale Veröffentlichungsnummer: WO 2006/005320

(56) Entgegenhaltungen:
- EP-A- 1 449 698
- US-A1- 2001 006 297

## Beschreibung

Die Erfindung betrifft ein Cabriolet-Fahrzeug mit einem zwischen einer geschlossenen Stellung und einer Zwischenstellung längsverlagerbaren Dach nach dem Oberbegriff des Anspruchs 1.

Die DE 102 48 349 A1 zeigt ein solches Cabriolet-Fahrzeug, bei dem das Dach zu seiner Öffnung zunächst so weit nach hinten verfahren wird, das an der Dachspitze befindliche Eingriffszapfen aus ihrer formschlüssigen Sicherung an einem Windschutzscheibenrahmen gelöst werden, anschließend das Dach in der heckwärtigen Zwischenstellung aufgeschwenkt und in der Karosserie abgelegt wird und in dieser Stellung wieder in Fahrtrichtung nach vorne längsverlagert werden kann. Dabei können die Eingriffszapfen der Dachspitze in eine karosserieseitige Aufnahme einlaufen, um das Dach in geöffneter Stellung zu sichern. Dabei ist jedoch die Sicherung nur so lange gegeben, wie der Antrieb blockiert ist und ein Verlagern des Daches in die heckwärtige Position aktiv unterbindet.

Der Erfindung liegt das Problem zugrunde, bei einem Cabriolet-Fahrzeug der eingangs genannten Art die Sicherung des abgelegten Daches zu verbessern.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 12 verwiesen.

Mit der Erfindung ist eine Halterung des Daches in seiner abgelegten Stellung über ein zusätzlich zum Antrieb vorhandenes Verriegelungsorgan ermöglicht, so daß die Sicherung des Daches in dieser Stellung nicht allein durch den Antrieb erfolgen muß.

Wenn vorteilhaft das oder die Verriegelungsorgan(e) durch eine vorwärts gerichtete Längsverlagerung des abgelegten Daches im Schließsinn und durch eine heckwärts gerichtete Längsverlagerung im Öffnungssinn betätigbar ist oder sind, ist ein zusätzlicher Steuerungsaufwand für die Verriegelung entbehrlich.

Eine besonders gute Sicherung des abgelegten Daches wird erreicht, wenn das Verriegelungsorgan über ein Kraftübertragungselement mit dem Antrieb verbunden ist, das in Schließstellung des Verriegelungsorgans in einer Über-Totpunkt-Stellung gehalten ist. Eine ungewollte Kraftbeaufschlagung des Daches, zum Beispiel beim Überfahren eines Schlaglochs, kann dann auch bei einem im Leerlauf befindlichen Antrieb nicht zum Lösen des Verriegelungsorgans führen. Die Verriegelung ist dann in geschlossener Stellung vollständig unabhängig vom Antrieb gesichert. Auch kann das Verriegelungsorgan beim Schließen Teile des Daches aktiv abwärts ziehen, wodurch ein besonders flaches Dachpaket ermöglicht ist, so daß ein verbleibender Kofferraum vergrößert ist.

Sofern die Längsverlagerung des Daches zumindest über Einwirkung auf seitliche Hauptlager zu bewerkstelligen ist, kann das Dach in herkömmlicher Weise ausgebildet und modular in die Karosserie einsetzbar sein. Die Verlagerung betrifft dann nur die Schnittstelle zwischen dem Dachmodul insgesamt und der Karosserie.

Hierbei können insbesondere zur Sicherstellung einer zuverlässigen und verkantungsfreien Bewegung seitliche Führungsschienen in der Karosserie angeordnet sein.

Sofern als Kraftübertragungselement eine Kurvenscheibe vorgesehen ist, von der sowohl ein Gestänge für das Verschlußglied als auch der Gleiter für die Längsverlagerung des Daches bewegbar sind, ist der konstruktive Aufwand für die Längsverlagerung und Verriegelung des Daches minimiert. Auch die oben erwähnte vorteilhafte Über-Totpunkt-Lage läßt sich dann durch eine entsprechend geformte Kulisse in der Kurvenscheibe leicht realisieren.

Bei einer hakenförmigen Ausbildung des oder der Verriegelungsorgan(e) und insbesondere bei Übergreifen eines Sicherungsansatzes des Daches von hinten kann das abgelegte Dach sowohl gegen eine heckwärtige Längsverlagerung als auch gegen eine Aufwärtsverlagerung gesichert sein.

Ein Verschiebeweg des Daches von nur wenigen Zentimetern ist mechanisch unkritisch, ein hierfür verwendetes Stellglied kann einfach und kompakt ausgebildet sein. Der Zeitaufwand zum Öffnen oder Schließen des Daches ist aufgrund des geringen Verschiebewegs nur minimal erhöht.

Insbesondere ist die Erfindung auch an einem Dach mit starren Dachteilen anwendbar.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: ein erfindungsgemäßes Cabriolet-Fahrzeug in schematischer, unten abgebrochener Seitenansicht bei geschlossenem Dach,
- Fig. 1a: eine ähnliche Ansicht wie Fig. 1 mit zusätzlich eingezeichnetem Stellglied zur Verlagerung des Hauptlagers und mit geöffnetem Schiebedach eines vorderen Dachteils,
- Fig. 2: eine ähnliche Ansicht wie Fig. 1 nach horizontaler Verlagerung des Daches entgegen der Fahrtrichtung zur Einleitung einer Öffnung des Daches,
- Fig. 3: eine ähnliche Ansicht wie Fig. 2 während der Öffnungsbewegung des Daches,
- Fig. 4: eine ähnliche Ansicht wie Fig. 3 bei vollständig geöffnetem Dach und wieder nach vorne verlagertem Hauptlager,
- Fig. 5: eine Detailansicht von für die Dachlängsverlagerung und Verriegelung wesentlichen Bauteilen, in etwa entsprechend dem Ausschnitt V in Fig. 4,
- Fig. 6: eine ähnliche Ansicht wie Fig. 5, jedoch bei heckwärts längsverlagertem Dach.

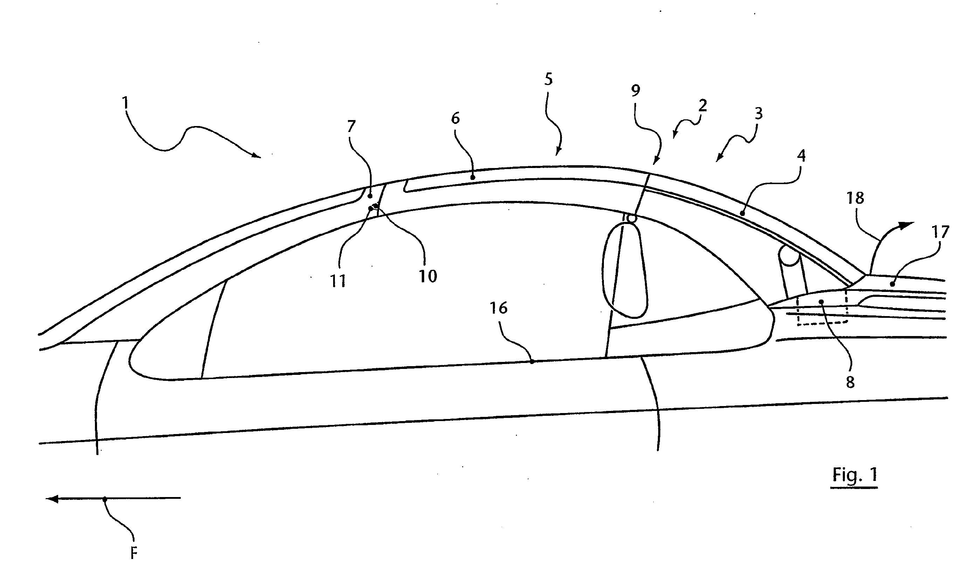

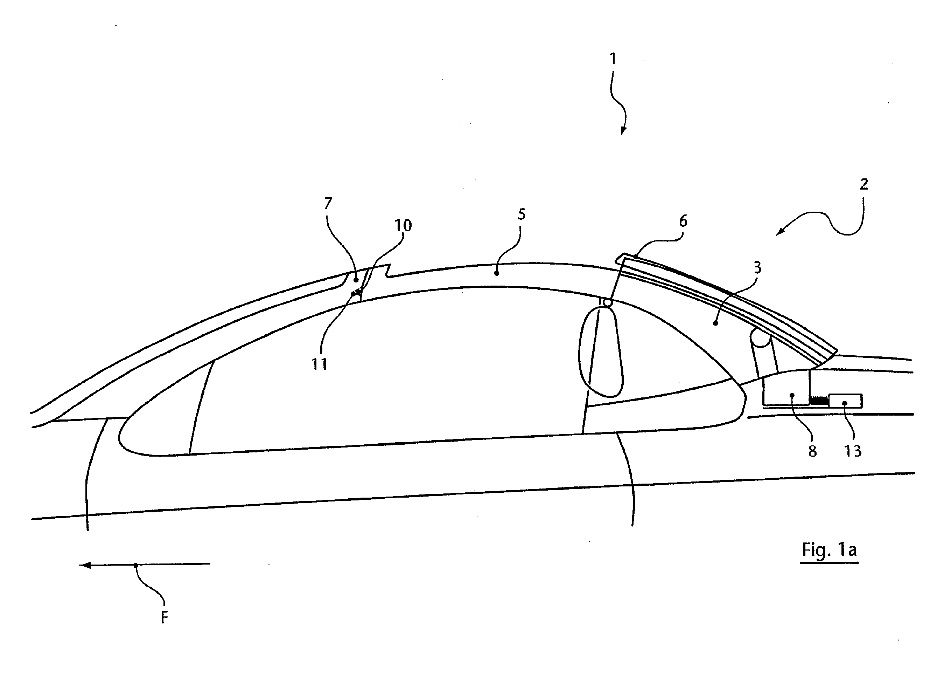

Die Erfindung kann sowohl, wie in Figur 1 dargestellt, ein zweisitziges Cabriolet-Fahrzeug 1 als auch ein Cabriolet-Fahrzeug mit mehr Sitzplätzen, etwa mit zwei Sitzreihen hintereinander, betreffen.

Das Fahrzeug 1 umfaßt ein bewegliches Dach 2, das ein bezüglich der Fahrtrichtung F rückwärtiges Dachteil 3 mit einer Heckscheibe 4 umfaßt.

Das Dachteil 3 kann starr ausgebildet sein und beispielsweise im wesentlichen aus Stahl, einem Leichtmetall, einem metallischen Schaumwerkstoff oder Kunststoff bestehen. Es ist auch möglich, daß das hintere Dachteil 3 im wesentlichen nur von einer kuppelartig gewölbten Heckscheibe 4 gebildet ist.

Weiter umfaßt das Dach 2 ein gegenüber dem Dachteil 3 im geschlossenen Zustand in Fahrtrichtung F vorgeordnetes vorderes Dachteil 5. Dieses ist im Ausführungsbeispiel mit einem zweisitzigen Fahrzeug 1 von einem durchgehenden Plattenteil ohne weitere Querteilung gebildet. Im geschlossenen Zustand stützt sich dieses unmittelbar oder unter Zwischenschaltung noch eines weiteren Teils, etwa eines aufstellbaren Sonnenschutzes oder eines anderen Zwischenteils, am Windschutzscheibenrahmen 7 ab. Die Dachteile 3, 5 können nicht nur als starre Bauteile, sondern auch als gemeinsam oder einzeln textil bespannte Einheiten ausgebildet sein.

Das vordere Dachteil 5 umfaßt im Ausführungsbeispiel nach Fig. 1a zusätzlich einen verschiebbaren Plattenkörper 6, der nach Art eines Schiebedachs zu öffnen und hierbei über das rückwärtige Dachteil 3 zu verlagern ist.

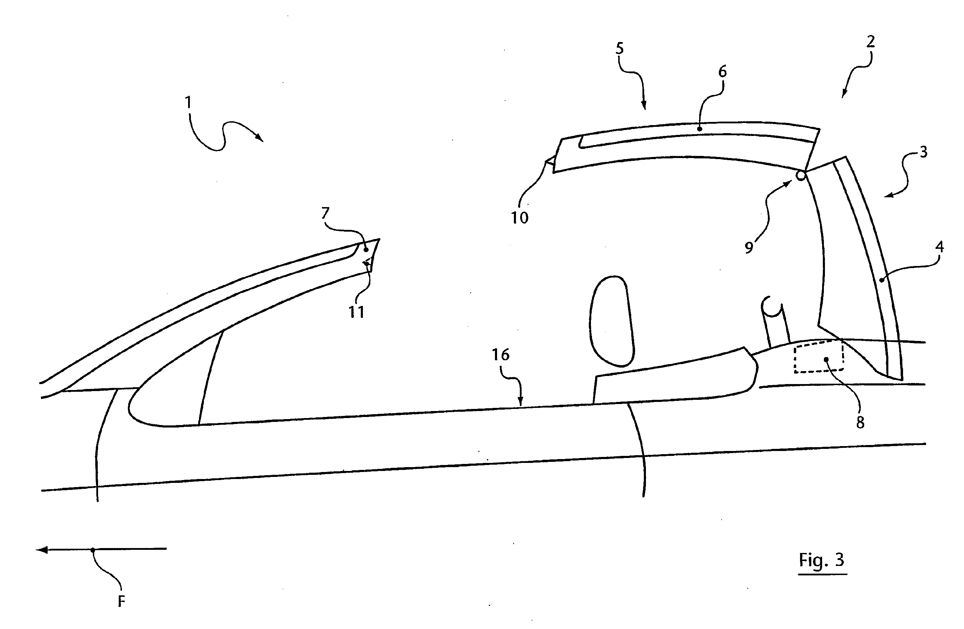

Die Dachteile 3, 5 sind für ihre Ablagebewegung in die Karosserie oder für ihre umgekehrte Schließbewegung über seitlich in der Karosserie angeordnete Hauptlager 8 um diesen zugeordnete horizontale und quer zum Fahrzeug 1 liegende Achsen schwenkbar. Die beiden Dachteile 3, 5 schwenken dabei gemeinsam um das Hauptlager 8 und können sich gleichzeitig zur Öffnung um ihre Trennfuge 9 gegeneinander einfalten (Fig. 3). Anstelle der reinen Schwenklager 8 sind als Hauptlager auch andere bewegliche Halterungen für das Dach 2 an der Karosserie möglich, etwa Mehrgelenke oder Vorrichtungen für überlagerte Bewegungen mit translatorischen und rotatorischen Anteilen.

Zur Festlegung des vorderen Dachteils 5 am Windschutzscheibenrahmen 7 sind dem Dachteil 3 in etwa in dessen Erstreckungsebene gelegene und im geschlossenen Zustand in Fahrtrichtung F weisende Zapfen 10 zugeordnet, die in komplementäre Ausnehmungen 11 des Windschutzscheibenrahmens 7 eingreifen können. Die Zapfen 10 können ebenso wie die Ausnehmungen 11 konisch ausgebildet sein, um dadurch eine Zentrierung des schließenden Daches 2 zu erleichtern. Auch andere geeignete Haltemittel können alternativ oder zusätzlich vorgesehen sein.

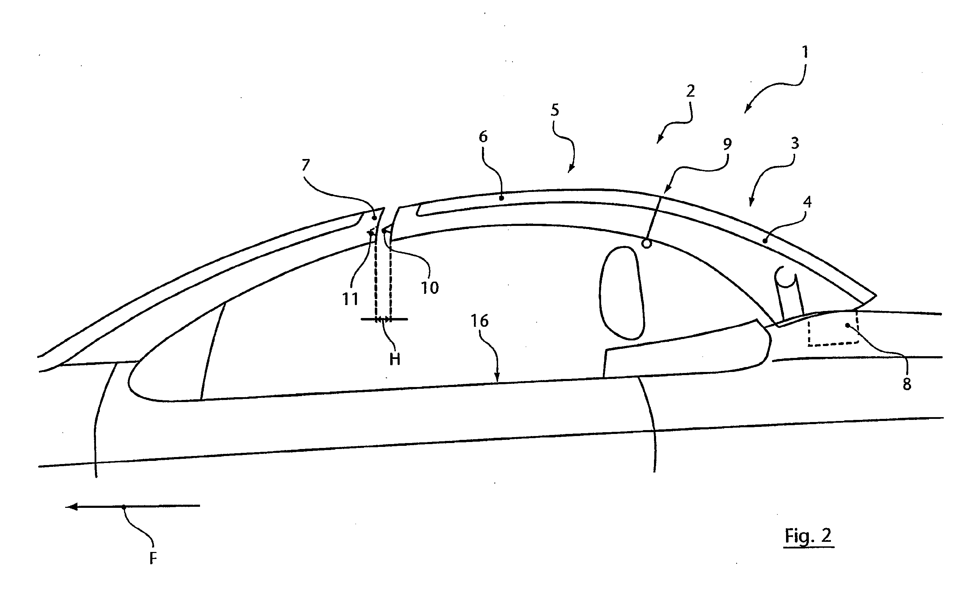

Im Ausführungsbeispiel ist jedem der seitlichen Hauptlager 8 ein Antrieb 13 zugeordnet, etwa ein Hydraulikzylinder, eine Spindel, ein Elektromotor oder ähnliches. Auch ein gemeinsamer Antrieb ist prinzipiell möglich. Über den Antrieb 13 ist das jeweilige Hauptlager 8 - und damit das gesamte an diesem gehaltene Dach 2 - horizontal in Richtung des Pfeils H längsverlagerbar zwischen einer vorderen Extremalstellung (Fig. 1) und einer hinteren, hier als Zwischenstellung bezeichneten Extremalstellung (Fig. 2), in der das Dach 2 so weit entgegen der Fahrtrichtung F verlagert ist, daß die Zapfen 10 außer Eingriff mit den Ausnehmungen 11 des Windschutzscheibenrahmens 7 gelangt sind. In dieser Stellung ist das Dach 2 frei um die Lager 8 schwenkbar, ohne daß Kollisionsgefahr der Dachspitze mit dem Windschutzscheibenrahmen 7 bestünde.

Für die Längsverlagerung der Hauptlager 8 sind diese über als Gleiter 19 ausgebildete Lagerkörper auf längs in der Karosserie liegenden Führungsschienen 20 gelagert.

Der Weg H zwischen der vorderen und hinteren Extremalstellung des Antriebs 13 ist dabei über einen eventuell einstellbaren hinteren Anschlag derart begrenzt, daß in der hinteren Extremalstellung des Daches 2 die Zapfen 10 gerade so weit außer Eingriff mit dem Windschutzscheibenrahmen 7 gelangt sind, daß das Schwenken stattfinden kann. Ein zu weites rückwärtiges Verlagern würde hingegen den Öffnungs- oder Schließvorgang unnötig verzögern. Der Weg H zwischen den Extremalstellungen beträgt daher nur wenige Zentimeter, etwa zwischen zwei und acht Zentimetern. Typisch ist ein Verschiebeweg von etwa 4 Zentimetern. Durch den kurzen Verschiebeweg H können die Horizontalverlagerung und das Schwenken des Daches 2 vollständig nacheinander ablaufen.

Anstelle der gezeigten vollständig horizontalen Längsverlagerung ist auch die Verschiebung der Lager 8 und des daran gehaltenen Daches 2 in einer leicht zur Horizontalen geneigten Ebene möglich, etwa in einer Ebene, die einer ansteigenden Fensterbrüstungslinie 16 oder einer fallenden Hecklinie folgen kann.

Im Ausführungsbeispiel ist dem Heckbereich der Karosserie ferner etwa in der Ebene der Fensterbrüstungslinie 16 ein Verdeckkastendeckel 17 zugeordnet, der in Richtung des Pfeils 18 aufschwenkbar ist.

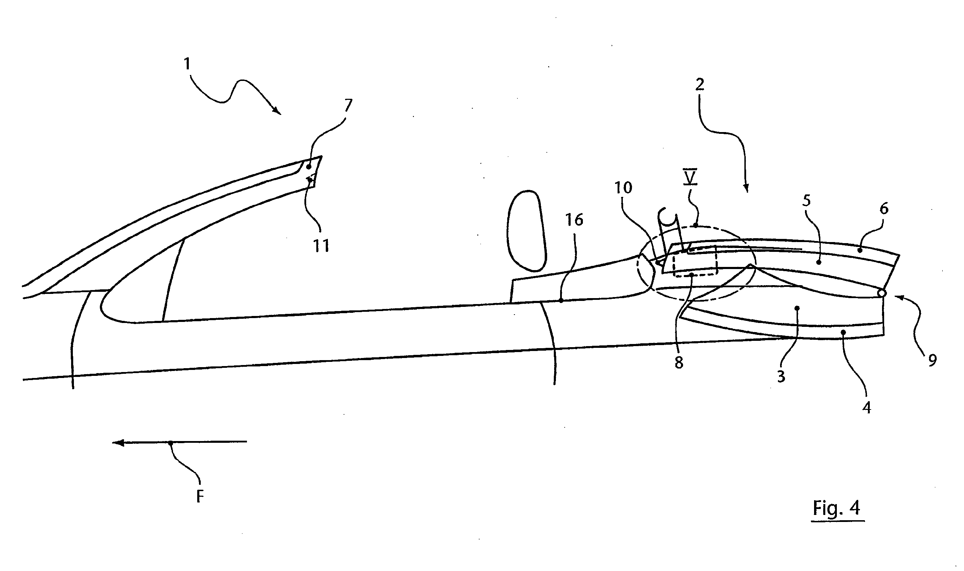

Zur Öffnung des Daches 2 aus der geschlossenen Stellung (Fig. 1) in eine vollständig geöffnete Stellung (Fig. 4) öffnet zunächst der Verdeckkastendeckel 17 in Richtung des Pfeils 18. Dann werden nach - zum Beispiel fernbetätigten - Entriegelung der Schlösser über die Antriebe 13 die Hauptlager 8 entgegen der Fahrtrichtung F in eine heckwärtige Zwischenstellung längsverlagert, gleichzeitig wird das vordere Dachteil 5 vom Windschutzscheibenrahmen 7 gelöst, indem die Zapfen 10 aus den Ausnehmungen 11 in Richtung des Pfeils H gezogen werden (Fig. 2). Anschließend wird das Dach 2 um die Lager 8 abwärts verschwenkt, gleichzeitig schwenken die Dachteile 3 und 5 gegeneinander ein (Fig. 3).

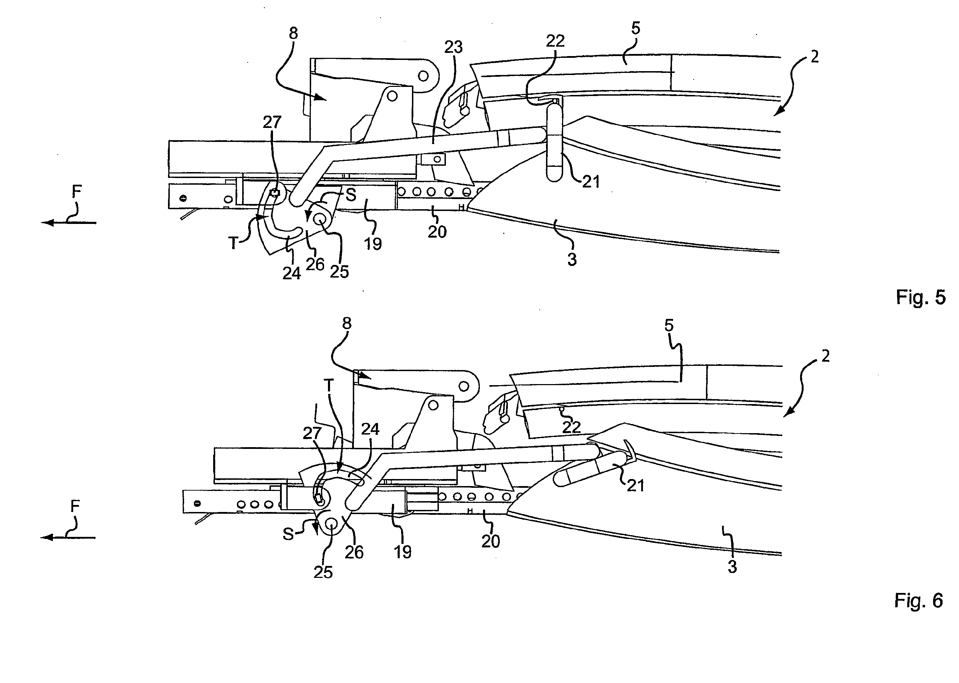

Dadurch gelangt das Dach in die abgelegte, jedoch noch nicht wieder nach vorne verlagerte Stellung nach Fig. 6, aus der es in die geöffnete Endstellung (Fig. 4, Fig. 5) vorwärts längsverlagerbar ist.

Bei dieser Längsverlagerung des abgelegten Daches 2, die durch den oder die Antrieb(e) 13 bewirkbar ist, ist gleichzeitig zumindest ein Verriegelungsorgan 21 zwischen seiner Offen- und seiner Schließstellung derart beweglich, daß es durch eine vorwärts gerichtete Längsverlagerung des abgelegten Daches 2 im Schließsinn und durch eine heckwärts gerichtete Längsverlagerung im Öffnungssinn betätigbar ist. Mit der Längsverlagerung des abgelegten Daches 2 in Fahrtrichtung F wird somit gleichzeitig und hier zwangsbewegt das Verriegelungsorgan 21 geschlossen, wodurch das Dach 2 in seiner abgelegten Endstellung (Fig. 5) gesichert ist.

Das Verriegelungsorgan 21 ist hier durch einen Schwenkhaken gebildet, der in seiner Schließstellung einen seitlich quer vorstehenden Sicherungsansatz 22, etwa einen Achsstummel, des Daches 2 von hinten übergreift und damit eine ungewollte Bewegung des Daches 2 sowohl nach hinten als auch nach oben hemmt.

Der Verriegelungshaken 21 ist über ein Gestänge 23 an eine Kurvenscheibe 26 angebunden, die als Kraftübertragungselement zwischen dem Antrieb 13 und dem Gestänge 23 dient. Dabei kann die Kurvenscheibe 26 unmittelbar auf einer quer zum Fahrzeug 1 angeordneten und karosseriefest gelagerten Antriebswelle 25 gehalten sein und in Doppelfunktion auch einen in ihrer Kurvenkulisse 24 geführten Ansatz 27 des Gleiters 19 bewegen.

Alternativ kann auch der Antrieb 13 direkt den Gleiter 19 bewegen, wobei dann der in der Kulisse 24 geführte Ansatz 27 die Kurvenscheibe 26 um die Achse 25 verschwenkt.

In beiden Fällen ist die ausgenommene Kulisse 24 der Kurvenscheibe 26 so geformt, daß bei Verlagerung des Gleiters 19 in Fahrtrichtung F (Übergang von Fig. 6 zu Fig. 5) die Kurvenscheibe 26 zwangsläufig in Richtung des Pfeils S verschwenkt und dabei der Gleiter 19 über seinen Ansatz 27 bis zum Totpunkt T in der Kulisse 26 in Fahrtrichtung F und bei weiterem Verschwenken der Kurvenscheibe 24 über den Totpunkt T hinaus sehr gering heckwärts bewegt wird. Das Gestänge 23 zieht dabei während des gesamten Verschwenkens S den Verriegelungshaken 21 in seine Schließrichtung. Dadurch ist dieser in der sichernden Endstellung (Fig. 5) in einer Über-Totpunkt-Lage der Kurvenscheibe 26 gehalten.

In dieser Endstellung nach den Figuren 4 und 5 kann der Verdeckkastendeckel 17 über dem abgelegten Dach 2 wieder schließen, wobei aufgrund des Abwärtsziehens über den Verriegelungshaken 21 ein sehr flaches Dachpaket ermöglicht sein kann.

Die Erfindung ist sowohl bei Fahrzeugen mit manuell zu bewegenden Dächern auch bei voll- oder teilautomatischer Beweglichkeit des Daches 2 anwendbar. Es ist auch möglich, daß lediglich für die Horizontalverschiebung H Antriebe 13 vorgesehen sind und das eigentliche Ein- oder Ausfalten des Daches 2 manuell erfolgt.

## Patentansprüche

1. Cabriolet-Fahrzeug (1) mit einem Dach (2), das zwischen einer geschlossenen Stellung, in der es mittelbar oder unmittelbar an einem Windschutzscheibenrahmen (7) gehalten ist, und einer Zwischenstellung, in der die Halterung zwischen dem Dach (2) und dem Windschutzscheibenrahmen (7) gelöst ist, zumindest nahezu horizontal heckwärts längsverlagerbar ist, wobei das Dach (2) zumindest während eines Teils seiner Absenkbewegung in einen Aufnahmeraum der Karosserie in der heckwärtigen Zwischenstellung gehalten und im abgesenkten Zustand vorwärts längsverlagerbar ist,
**dadurch gekennzeichnet,**
**daß** mit der Längsverlagerung des abgelegten Daches (2) zumindest ein bewegliches Verriegelungsorgan (21) für dieses betätigbar ist.

2. Cabriolet-Fahrzeug nach Anspruch 1,
**dadurch gekennzeichnet,**
**daß** das Verriegelungsorgan (21) durch eine vorwärts gerichtete Längsverlagerung des abgelegten Daches (2) im Schließsinn und durch eine heckwärts gerichtete Längsverlagerung im Öffnungssinn betätigbar ist.

3. Cabriolet-Fahrzeug nach einem der Ansprüche 1 oder 2,
**dadurch gekennzeichnet,**
**daß** das Verriegelungsorgan (21) über ein Kraftübertragungselement (26) mit dem Antrieb (13) verbunden ist und dieses in Schließstellung des Verriegelungsorgans (21) in einer Über-Totpunkt-Stellung gehalten ist.

4. Cabriolet-Fahrzeug nach einem der Ansprüche 1 bis 3,
**dadurch gekennzeichnet,**
**daß** zur Längsverlagerung des Daches (2) zumindest ein Antrieb (13) auf seitliche Hauptlager (8) einwirkt.

5. Cabriolet-Fahrzeug nach einem der Ansprüche 1 bis 4,
**dadurch gekennzeichnet,**
**daß** für die Längsverlagerung seitliche Führungsschienen (20) in der Karosserie angeordnet sind, auf denen ein das jeweilige Hauptlager (8) tragender Lagerkörper (19) verschieblich ist.

6. Cabriolet-Fahrzeug nach Anspruch 5,
**dadurch gekennzeichnet,**
**daß** der Lagerkörper (19) von einem über eine Welle (25) und ein Kraftübertragungselement (26) bewegbaren Gleiter gebildet ist.

7. Cabriolet-Fahrzeug nach einem der Ansprüche 1 bis 6,
**dadurch gekennzeichnet,**
**daß** ein für die Längsverlagerung vorgesehener Antrieb (13) in Doppelfunktion mit einem Gleiter (19) und einem Verriegelungsorgan (21) gekoppelt ist.

8. Cabriolet-Fahrzeug nach Anspruch 7,
**dadurch gekennzeichnet,**
**daß** als Kraftübertragungselement (26) eine Kurvenscheibe vorgesehen ist, an der sowohl ein Gestänge (23) für das Verriegelungsorgan (21) als auch der Gleiter (19) für die Längsverlagerung des Daches (2) angebunden sind.

9. Cabriolet-Fahrzeug nach einem der Ansprüche 1 bis 8,
**dadurch gekennzeichnet,**
**daß** das Verriegelungsorgan (21) als Verriegelungshaken ausgebildet ist, der in Schließstellung einen Sicherungsansatz (22) des Daches (2) von hinten übergreift

10. Cabriolet-Fahrzeug nach einem der Ansprüche 1 bis 9,
**dadurch gekennzeichnet,**
**daß** der Weg (H) der Längsverlagerung zwischen zwei und acht Zentimetern beträgt.

11. Cabriolet-Fahrzeug nach einem der Ansprüche 1 bis 10,
**dadurch gekennzeichnet,**
**daß** zum Öffnen des Daches (2) der Verlagerungsweg (H) der zumindest nahezu horizontalen Verlagerung entgegen der Fahrtrichtung (F) bis zu einer Dachstellung begrenzt ist, in dem der vordere Dachbereich nach oben ohne Kollisionsgefahr mit dem Windschutzscheibenrahmen (7) frei schwenkbar ist.

12. Cabriolet-Fahrzeug nach einem der Ansprüche 1 bis 11,
**dadurch gekennzeichnet,**
**daß** die Längsverlagerung (H) und die Ablagebewegung des Daches (2), in der zumindest eine Schwenkkomponente enthalten ist, nacheinander ablaufen.

## Claims

1. A convertible vehicle (1) comprising a roof (2) which can be displaced longitudinally towards the rear, in an at least nearly horizontal manner, between a closed position, in which the roof (2) is supported directly or indirectly on a windscreen frame (7), and an intermediate position, in which the support between the roof (2) and the windscreen frame (7) is released, the roof (2) being held in the rearward intermediate position during at least part of the movement by which the roof (2) is lowered into a stowage compartment of the vehicle body and said roof (2) being longitudinally displaceable towards the front in its lowered state,
**characterised in that**
at least one movable locking member (21) for the roof (2) can be actuated by the longitudinal displacement of the stowed roof (2).

2. The convertible vehicle according to claim 1, **characterised in that** the locking member (21) can be actuated by forward longitudinal displacement of the stowed roof (2) in the closing direction and by rearward longitudinal displacement In the opening direction.

3. The convertible vehicle according to any one of claims 1 or 2, **characterised in that** the locking member (21) is connected to the drive (13) by a force transmission element (26) which is held in an overcentre position in the closed position of the locking member (21).

4. The convertible vehicle according to any one of claims 1 to 3, **characterised in that** at least one drive (13) acts on lateral main bearings (8) In order to effect the longitudinal displacement of the roof (2).

5. The convertible vehicle according to any one of claims 1 to 4, **characterised In that** lateral guide rails (20) for the longitudinal displacement are arranged in the vehicle body, on which guide rails (20) a respective bearing body (19) carrying each main bearing (8) is displaceable.

6. The convertible vehicle according to claim 5, **characterised in that** the bearing body (19) is formed by a slider which is movable via a shaft (25) and a force transmission element (26).

7. The convertible vehicle according to any one of claims 1 to 6, **characterised in that** a drive (13) provided for the longitudinal displacement is coupled, in a double function, with a slider (19) and a locking member (21).

8. The convertible vehicle according to claim 7, **characterised in that** a cam disk is provided as the force transmission element (26), to which cam disk both a linkage (23) for the locking member (21) and the slider (19) for the longitudinal displacement of the roof (2) are connected.

9. The convertible vehicle according to any one of claims 1 to 8, **characterised in that** the locking member (21) is provided as a locking hook which, in the closed position, engages over a securing lug (22) of the roof (2) from behind.

10. The convertible vehicle according to any one of claims 1 to 9, **characterised in that** the path length (H) of the longitudinal displacement is between two and eight centimetres.

11. The convertible vehicle according to any one of claims 1 to 10, **characterised in that**, to open the roof (2), the displacement path (H) of the at least nearly horizontal displacement counter to the direction of travel (F) is limited up to a roof position in which the front roof part can be freely pivoted upward without any risk of collision with the windscreen frame (7).

12. The convertible vehicle according to any one of claims 1 to 11, **characterised in that** the longitudinal displacement (H) and the stowage movement of the roof (2), which comprises at least one pivoting component, occur in sequence.

## Revendications

1. Véhicule cabriolet (1) avec un toit (2) qui est déplaçable vers l'arrière dans une direction longitudinale, au moins partiellement horizontale, entre une position fermée, dans laquelle le toit (2) est retenu directement ou indirectement sur un cadre de pare-brise (7), et une position intermédiaire, dans laquelle la retenue entre le toit (2) et le cadre de pare-brise (7) est relâchée, le toit (2) étant tenu dans la position intermédiaire arrière pendant au moins une partie du mouvement d'abaissement du toit (2) dans un compartiment de rangement prévu dans la carrosserie et ledit toit (2), en état abaissé, étant déplaçable vers l'avant dans une direction longitudinale,
**caractérisé en ce que**
le déplacement longitudinal du toit rangé (2) permet d'actionner au moins un organe de verrouillage (21) mobile pour ledit toit (2).

2. Véhicule cabriolet selon la revendication 1, **caractérisé en ce que** ledit organe de verrouillage (21) peut être actionné par un déplacement longitudinal du toit rangé (2) vers l'avant, dans la direction de fermeture, et par un déplacement longitudinal vers l'arrière, dans la direction d'ouverture.

3. Véhicule cabriolet selon l'une quelconque des revendications 1 ou 2, **caractérisé en ce que** l'organe de verrouillage (21) est relié à l'entraînement (13) par un élément de transmission de force (26) qui est tenu dans une position de dépassement de point mort lorsque l'organe de verrouillage (21) se trouve dans sa position de fermeture.

4. Véhicule cabriolet selon l'une quelconque des revendications 1 à 3, **caractérisé en ce qu'**au moins un entraînement (13) agit sur des paliers principaux latéraux (8) pour le déplacement longitudinal du toit (2).

5. Véhicule cabriolet selon l'une quelconque des revendications 1 à 4, **caractérisé en ce que** des rails de guidage latéraux (20) pour le déplacement longitudinal sont disposés dans la carrosserie, sur lesquels un corps de palier (19) supportant le palier principal respectif (8) est déplaçable.

6. Véhicule cabriolet selon la revendication 5, **caractérisé en ce que** le corps de palier (19) est constitué par un glisseur qui est déplaçable par un arbre (25) et un élément de transmission de force (26).

7. Véhicule cabriolet selon l'une quelconque des revendications 1 à 6, **caractérisé en ce qu'**un entraînement (13) prévu pour le déplacement longitudinal est accouplé, en double fonction, à un glisseur (19) et à un organe de verrouillage (21).

8. Véhicule cabriolet selon la revendication 7, **caractérisé en ce que** l'on prévoit un disque-came en tant qu'élément de transmission de force (26) avec lequel sont reliés en même temps une tringlérie (23) pour l'organe de verrouillage (21) et ledit glisseur (19) pour le déplacement longitudinal du toit (2).

9. Véhicule cabriolet selon l'une quelconque des revendications 1 à 8, **caractérisé en ce que** l'organe de verrouillage (21) est réalisé sous la forme d'un crochet de verrouillage qui, en position fermée, prend par-dessus et par l'arrière une embase de blocage (22) du toit (2).

10. Véhicule cabriolet selon l'une quelconque des revendications 1 à 9, **caractérisé en ce que** le chemin (H) du déplacement longitudinal est d'entre deux et huit centimètres.

11. Véhicule cabriolet selon l'une quelconque des revendications 1 à 10, **caractérisé en ce que**, pour ouvrir le toit (2), le chemin (H) du déplacement au moins presque horizontal à l'opposée de la direction de marche (F) est limité jusqu' à une position de toit dans laquelle la partie avant du toit peut pivoter librement vers le haut sans risque de collision avec le cadre de pare-brise (7).

12. Véhicule cabriolet selon l'une quelconque des revendications 1 à 11, **caractérisé en ce que** le déplacement longitudinal (H) et le mouvement de rangement du toit (2), qui comprend au moins une composante de pivotement, se déroulent l'un après l'autre.
